# EUROPEAN PATENT SPECIFICATION

(11) **EP 0 575 089 B1**
(45) Date of publication and mention of the grant of the patent: **13.01.1999**
(21) Application number: 93304452.1
(22) Date of filing: 08.06.1993
(51) Int. Cl.: C08L 81/02, C08K 5/54

(54) **Ductile poly(arylene sulfide) resin compositions**
Verformbare Polyarylensulfidharzmischungen
Compositions ductiles de résine de sulfure de polyarylène

(30) Priority: 15.06.1992 US 898634
(43) Date of publication of application: 22.12.1993
(73) Proprietor: HOECHST CELANESE CORPORATION, Somerville, N.J. 08876 (US)
(72) Inventor: Sullivan, Vincent J., No.56 Madison, New Jersey (US); Auerbach, Andrew B., Livingston, New Jersey (US)
(74) Representative: De Minvielle-Devaux, Ian Benedict Peter

(56) References cited:
- EP-A- 0 142 825
- EP-A- 0 369 244
- US-A- 4 797 448

## Description

### BACKGROUND OF THE INVENTION

This invention relates to poly(arylene sulfide) resin compositions having improved ductility.

Poly(arylene sulfide) resins are thermoplastic, aromatic polymers having relatively high use temperatures (i.e., typically in excess of 200°C) as well as good dimensional stability and toughness. Compared to many other thermoplastic resins (e.g., poly(alkylene terephthalate)s, nylons, and polyacetal) poly(arylene sulfide)s possess superior chemical and flame resistance. Owing to the highly crystalline nature of many poly(arylene sulfide)s, their use in applications where ductility is desired typically requires the incorporation of one or more additives such as impact modifiers, plasticizers and/or processing aids. The drawback of many of these additives, for example, olefin and acrylate rubbers, is that they may deleteriously affect the physical and/or thermal properties, as well as the chemical and flame resistance of the poly(arylene sulfide) resins into which they are incorporated.

Polyorganosiloxanes, which exhibit superior high temperature properties and greater chemical and flame resistance compared to many olefin and acrylate based rubbers, have been suggested as possible modifiers to improve the impact resistance of poly(arylene sulfide)s. For example, U.S. Patent No. 4,450,266 to Idel et al. describes compositions comprising blends of p-poly(phenylene sulfide) and poly(methyl-H-siloxane). Similarly, U.S. Patent No. 3,929,708 to Brady et al. discloses blends of poly(arylene sulfide)s with one or more silicon fluids such as dimethylpolysiloxane, diethylpolysiloxane, dibutylpolysiloxane, dihexylpolysiloxane, dicyclohexylpolysiloxane, diphenylpolysiloxane, methylethylpolysiloxane, phenylmethylpolysiloxane, and cyclopentylpropylpolysiloxane.

Silicon containing rubbers have also been suggested for use as impact modifiers in poly(arylene sulfide)s. See, for example, U.S. Patent No. 4,581,411 to Liang et al., disclosing the use of a hydroxy terminated diarylsilane/dialkylsilane rubber as an impact modifier in poly(phenylene sulfide)s; and European Patent Application No. 0 369 245, disclosing compositions comprising blends of poly(arylene sulfide) resin and a polyorganosiloxane graft copolymer prepared by grafting a vinyl monomer on a polyorganosiloxane rubber having an average particle size in a range of 0.15 µm to 0.5 µm. European Patent Application No. 0 369 245 suggests that the grafting of reactive functionality onto a polysiloxane rubber provides a means of improving the compatibility of the rubbber with the poly(arylene sulfide), thereby, increasing the impact resistance of the resultant resins.

The use of silicon-containing rubbers in conjunction with certain silanes in poly(arylene sulfide) resins has also been described. See, for example, U.S, Patent No. 5,071,907 to Nakata et al. and European Patent Application Publication No. 0 369 244, both assigned to Mitsubishi Rayon Co., Ltd., describing polyarylene sulfide resin compositions containing (A) 99 to 60 parts by weight of poly(arylene sulfide), (B) 1 to 40 parts by weight of a polyorganosiloxane rubber having a particle size of 0.1 µm to 0.5 µm, (C) 0.01 to 10 parts by weight, based on 100 parts by weight of the total of (A) and (B) of a functionalized organosilane compound and, optionally, (D) filler. Additionally, the use of silane additives in poly(phenylene sulfide) resins containing hydroxyl terminated diarylsilane/dialkylsilane copolymer is disclosed by the above referenced patent to Liang et al.

In the case of U.S. Patent No. 5,071,907, the functionalized organosilane component (C) is characterized as having an isocyanate group bonded to at least one alkyl group which, in turn, is bonded to a silicon atom of the organosilane. In the case of European Patent Application No. 0 369 244, the organosilane (C) is characterized as having at least one epoxy group and at least one alkoxy group bonded directed to a silicon atom thereof. The described organosilanes are said to react with the poly(arylene sulfide) resin and the polyorganosiloxane rubber and, thus, are believed to function as compatibilizers.

The resin compositions of the above cited Mitsubishi Rayon references are prepared by dispersing a powdery poly(arylene sulfide) in an aqueous emulsion of the polyorganosiloxane, coagulating the resulting dispersion, recovering poly(arylene sulfide) particles in which the polyorganosiloxane is dispersed, combining the recovered poly(arylene sulfide) with the polyoragnosiloxane and extruding the resultant composition to form the described resin. This technique for incorporating the polyorganosiloxane into the poly(arylene sulfide) component is described as providing enhanced impact resistance compared to simple melt blending of the various resin components which is characterized as yielding a non-uniform dispersion of rubber in the polymer matrix. Non-uniform rubber dispersion, together with the relative incompatibility of the rubber with the polymer matrix is suggested to be the cause of inadequate impact enhancement.

The Mitsubishi Rayon references require that the polyorganosiloxane component be of a relatively fine particle size (i.e., in a range of 0.1 µm to 0.5 µm). The Mitsubishi references state that "when the average particle size is less than 0.1 µm or more than 0.5 µm impact resistance is not sufficiently exhibited" suggesting that there is a direct correlation between particle size and impact resistance. These references suggest that with particles of such a small size, the described preparative techniques are be expected to result in a more uniform dispersion of the polyorganosiloxane rubber than might otherwise be obtained vis-a-vis melt compounding. Compared to simple melt blending, however, the process described by the Mitsuibishi Rayon applications is a complex procedure which is both time consuming and costly.

The disclosures of the aboved referenced patents and applications, notwithstanding, it has been found that ductility (as measured by the physical properties of finished articles produced from such resins and/or the characteristics of the resins in the melt) of poly(arylene sulfide) resins is widely variable depending upon the particular silicon-containing additives incorporated therein. Thus, there remains a need for poly(arylene sulfide) resins having desirable ductility, particularly, resins which can be formed by relatively simple processing techniques.

It is an object of this invention to provide poly(arylene sulfide) resins which exhibit ductility in the melt and, in certain embodiments, good impact in finished articles. It is a further object of this invention to provide impact resistant poly(arylene sulfide) resins capable of producing molded or extruded articles having both good impact and elongation. It is yet another object of this invention to provide poly(phenylene sulfide) resins suitable for use in the production of extruded, drawn or spun articles, in particular fibers, filaments, films and coatings.

### SUMMARY OF THE INVENTION

The invention provides a resin composition which comprises a melt blend of:
(A) from 99.5 to 70 percent by weight, based on the total weight of components (A) and (B), of a poly(arylene sulfide) having a melt viscosity of from 30 to 800 Pas as measured at 1,200 sec⁻¹ and 310°C;
(B) from 0.5 to 30 percent by weight, based on the total weight of components (A) and (B), of a substantially non-functionalized emulsion cured silicone rubber which is the condensation product of (i) an organopolysiloxane having at least two active hydrogen functional groups per molecule and (ii) an organohydrogenpolysiloxane having at least two silicon-bonded hydrogen atoms per molecule; and
(C) from 0.1 to 2.0 parts by weight, based on 100 parts by weight of components A, B and C combined, of an aminosilane; wherein said composition has been prepared by combining components B and C with component A in the absence of a dispersion medium.

The invention also provides a process for producing a poly(arylene sulfide) resin which comprises the steps of:
(1) combining in a substantially anhydrous state:
   (A) from 99.5 to 70 percent by weight, based on the total weight of components (A) and (B), of a poly(arylene sulfide) having a melt viscosity of from 30 to 800 Pas as measured at 1,200 sec⁻¹ and 310°C;
   (B) from 0.5 to 30 percent by weight, based on the total weight of components (A) and (B), of a substantially non-functionalized emulsion cured silicone rubber which is the condensation product of (i) an organopolysiloxane having at least two active hydrogen functional groups per molecule and (ii) and organohydrogenpolysiloxane having at least two silicon-bonded hydrogen atoms per molecule, to form a dry or melt blend of poly(arylene sulfide) and silicone rubber;
(2) introducing into the blend of step 1 and aminosilane in an amount of from 0.1 to 2.0 parts by weight, based on 100 parts by weight of component (A), component (B), and the aminosilane combined; and
(3) melt extruding the blend of step 2.

### DETAILED DESCRIPTION OF THE INVENTION

The poly(arylene sulfide) ("PAS") component of this invention is a polymer consisting essentially of repeating units of the formula: 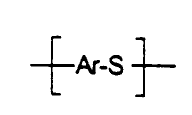 wherein Ar for an individual repeating unit is a divalent radical selected from the group consisting of: 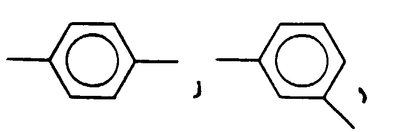 and 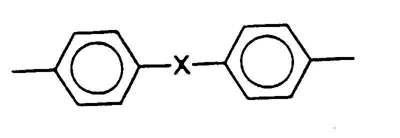 wherein X is a divalent radical selected from the group consisting of -SO₂-, -C(O)-, -O-, -CₐH₂ₐ- and -C(CH₃)₂- wherein a is an integer having a value of 0 to 3. Additionally, the aromatic rings of the individual radicals Ar may be optionally substituted by 1 to 3 substituents selected from the group consisting of alkyl groups having up to 4 carbon atoms, and fluorine, chlorine and bromine radicals. For purposes of this invention unsubstituted polymers are of particular interest. Mixtures of two or more different poly(arylene sulfide)s are also suitable for use herein.

The poly(arylene sulfides) used herein and their method of preparation are well known in the art and are described, for example in U.S. Patent Nos. 3,354,127; 4,645,826; and 4,645,826. In general, such poly(arylene sulfide)s are prepared by the reaction of an alkali metal sulfide and a dihalo-aromatic compound. Depending upon the particular method of preparation, the poly(arylene sulfide) may exist as a random or block homopolymers or copolymers.

The poly(arylene sulfide) may be a linear or branched polymer having a melt viscosity of from 30 to 800 Pas (300 to 8,000 poise), preferably from 100 to 500 Pas (1,000 to 5,000 poise) at 1,200 sec⁻¹ and 310°C. Substantially linear polymers are of particular interest. The viscosity of the polymer will be dependent in part on the molecular weight thereof and the extent to which it is crosslinked ("cured"). Both uncured or partially cured polymers are suitable for use herein. Curing of the poly(arylene sulfide) may be accomplished by thermal and/or solvent treaments such as are known in the art.

Poly(arylene sulfide)s of particular interest include high viscosity polymers as disclosed in U.S. 4,645,826, having viscosities which are within the useful range described above. As disclosed therein, a linear PAS can be readily produced by forming a PAS prepolymer of low to medium molecular weight according to a preliminary polymerization, then elevating the temperature by heating the polymerization system under strongly alkaline conditions with addition of a phase separating agent to the polymerization system, thereby separating the system into two liquid phases of high viscosity phase (polymer solution phase) and low viscosity phase (solvent phase), and carrying out the reaction under such a state.

The two-phase separated polymerization comprises dissolving a low viscosity arylene sulfide prepolymer, in a poor solvent, i.e., water, under a strongly alkaline condition (in a pH range of from 9.5 to 14 of the reaction mixture when diluted 10-fold with water) in a temperature range of from 245°C to 290°C into a liquid-liquid two-phase separated state and maintaining this state for 1 to 50 hours to convert the arylene sulfide prepolymer into a high molecular weight polymer, then separating the polymer from the polymerization system and purifying the polymer after neutralization.

The process for production of a high to ultra-high molecular weight PAS according to U.S. 4,645,826 comprises, in general, forming PAS molecules through bonding between an alkali metal sulfide and a dihalo-aromatic compound and/or converting the PAS molecules into a high molecular weight polymer. PPS having melt viscosities of at least 100 Pas (1,000 poise) at 1,200 sec⁻¹ can be produced by the process as disclosed therein.

The starting materials for producing the prepolymer comprises an alkali metal sulfide, a dihalo-aromatic compound and a polymerization solvent. The alkali metal sulfide includes lithium sulfide, sodium sulfide, potassium sulfide, rubidium sulfide, cesium sulfide and mixtures thereof. These alkali metal sulfides can be used as hydrates or aqueous mixtures, or in anydrous forms. Among these alkali sulfides, sodium sulfide is the least expensive and is commercially preferred. It is also possible to use a small amount of an alkali metal hydroxide in combination in order to neutralize an acidic salt (e.g., alkali metal disulfides and alkali bicarbonates) which may sometimes occur in minute amount in an alkali metal sulfide.

The dihalo-aromatic compound used includes any of the dihalo-aromatic compounds as disclosed in Japanese Laid-open Patent Publication No. 22926/1984. Particularly preferred are p-dichlorobenzene, m-dichlorobenzene, 2,5-dichlorotoluene, 2,5-dichloro-p-xylene, p-dibromobenzene, 1,4-dichloronaphthalene, 1-methoxy-2,5-dichlorobenzene, 4,4'dichlorobiphenyl, 3,5-dichlorobenzoic acid, p,p'-dichlorodiphenylether, p,p'dichlorodiphenylsulfone, p,p'dichlorodiphenylsulfoxide and p,p'dichlorodiphenylketone. Among these, those composed mainly of para-dihalobenzene, typically p-dichlorobenzene, are especially preferred.

By appropriate selection and combination of dihaloaromatic compounds, a random or block copolymer containing two or more different reaction units can be obtained. For example, when employing p-dichlorobenzene in combination with m-dichlorobenzene or p,p'-dichlorodiphenylsulfone, a random or block compolymer containing: 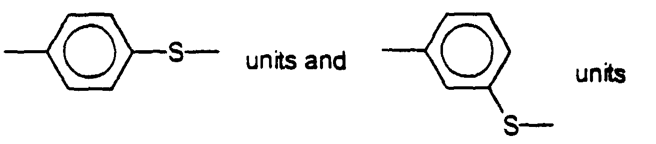 or 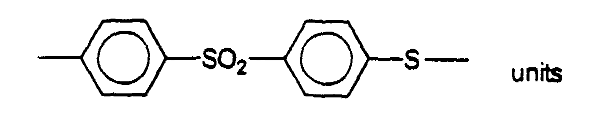 can be obtained. Further, a small amount of a polyhaloaromatic compound (e.g., trichlorobenzene) within the range which may provide some cross-linking but not substantially impair linearity may also be employed in combination, but no such compound is ordinarily required.

An organic amide solvent which is used in the polymerization step can be used for forming the prepolymer and can be selected from N-methylpyrrolidone (NMP); N-ethyl-pyrrolidone; N,N'dimethylformamide; N,N'dimethylacetamide; N-methylcaprolactam; tetramethylurea; hexamethylphosphorotriamide; and mixtures thereof. Among these, N-methylpyrrolidone is particularly preferred from viewpoints such as chemical stability and the ability to produce readily a high molecular weight polymer. The organic amide as the polymerization solvent is desirably an aprotic compound. In the polymerization step for forming an ultra-high molecular linear polymer from the prepolymer, the above organic amide can of course be used. Otherwise, it is also possible to employ, for example, aromatic hydrocarbons (C₆ -C₃₀), aliphatic hydrocarbons (C₆-C₃₀), ethers (C₆-C₃₀), ketones (C₅ -C₃₀), pyridine or quinoline or derivatives of these (C5-C30), and mixtures thereof as such or as mixtures with organic amides.

In practicing the process, first, an alkali metal sulfide and a dihalo-aromatic compound are added into an organic solvent, desirably under an inert gas atmosphere, and the temperature is elevated to a desired temperature at which the reaction is carried out. Here if the water content in the alkali metal sulfide is less than the desired content, the necessary amount of water is added for supplementation.

The preliminary polymerization is preferably conducted at a temperature in the range of from 160 to 260°C, particularly from 180 to 235°C. At a temperature lower than 160°C, the reaction rate may be extremely slow, while at a temperature over 260°C, the PAS formed is liable to be decomposed to produce only a PAS with extremely low melt viscosity.

The end point of the preliminary polymerization step and the timing of turning from the preliminary polymerization to the two-phase separate polymerization, is preferably the point when the conversion of the dihalo-aromatic compound has reached 70 mole % to 98 mole %.

At the point of turning from the preliminary polymerization to the two-phase separated polymerization, the melt viscosity of the PAS is preferably in the range of from 0.5 to 30 Pas (5 to 300 poise) (at 310°C and a shearing rate of 200 sec⁻¹). The range of from 1 to 20 Pas (10 poise to 200 poise) is more suited for obtaining a PAS of a high polymerization. With a viscosity less than 0.5 Pas (5 poise), formation of two-phase separation is insufficient, whereby decomposition of the polymerization system or lowering of the reaction rate will readily occur. With a viscosity over 30 Pas (300 poise), harmful substances which will promote polymer cleavage will be accumulated in greater amount, whereby a lowering in polymer yield and decomposition of the polymer system will undesirably be caused.

The polymerization process as described in U.S. 4,645,826 is applicable for not only homopolymerization or random copolymerization but also for block copolymerization. For example, a purified p-phenylene prepolymer and a purified m-phenylene prepolymer can be dispersed in the same polymerization vessel to carry out the two-phase separated polymerization step, whereby a (p-phenylenesulfide-(m-phenylene sulfide) block copolymer can readily be obtained.

Because of its availability and desirable properties such as high chemical resistance, nonflammability, and high strength and hardness poly(phenylene sulfide) is the presently preferred poly(arylene sulfide). Poly(phenylene sulfide) is available from a variety of sources including Hoechst Celanese Corporation, Phillips Petroleum Corporation, and Bayer Aktiengesellschaft.

The silicone rubber of this invention is the emulsion condensation product of an organopolysiloxane having at least two active hydrogen-containing functional groups per molecule ("Polysiloxane A") and an organohydrogenpolysiloxane having at least two silicon bonded hydrogen atoms per molecule ("Polysiloxane B"). Desirably, the silicone rubber, prior to melt compounding, is in the form of spherical particles having an average particle size of from about 0.5 µm to about 100 µm. Silicone rubbers having a pre-melt compounding particle size of from 1 µm to 10 µm are of particular interest. The silicone rubber used herein is a substantially non-functionalized rubber. The term "non-functionalized rubber" as used herein means a rubber, the only functionally reactive groups of which are unreacted sites provided by the silicon bonded hydrogen atoms of Polysiloxane B and the active hydrogen-containing groups of Polysiloxane A.

Polysiloxane A is a straight or slightly branched polymer the active hydrogen-containing functional groups of which are preferably located at terminal sites of the polymer. The preferred active hydrogen-containing functional groups are hydroxyl, however, in certain instances other active hydrogen containing functional groups, e.g., thiol, may be used. Illustrative of Polysiloxane A are methylphenylsiloxane/dimethylsiloxane copolymers and dimethylpolysiloxanes homopolymers having terminal hydroxyl groups at both ends of the molecular chain. Desirably, Polysiloxane A should have a molecular weight of at least about 3,000. Optionally, Polysiloxane A may be substituted at one or more of its silicon atoms by non-reactive monovalent radicals such as, for example, alkyl radicals having up to 4 carbon atoms, aryl radicals such as phenyl, aralkyl radicals such as benzyl, cycloalkyl radicals such as cyclopentyl and cyclohexyl.

Polysiloxane B includes the following: trimethylsiloxy-terminated methylhydrogenpolysiloxanes; trimethylsiloxy-terminated dimethylsiloxane-methylhydrogensiloxane copolymers; methylhydrogensiloxy-terminated dimethylsiloxane-methylhydrogensiloxane copolymers; dimethylsiloxane-methylhydrogensiloxane cyclic copolymers; copolymers composed of (CH₃)₂HSiO_{1/2} units and SiO_{4/2} units; and copolymers composed of (CH₃)₃SiO_{1/2} units, (CH₃)₂HSiO_{1/2} units and SiO_{4/2} units. Desirably, Polysiloxane B has a viscosity of from about 1 to about 50,000 Pa.S, preferably from about 1 to about 1,000 Pa.S at 25°C. The silicon bonded hydrogen content of Polysiloxane B should not exceed 1 percent by weight since excess amounts of silicon bonded hydrogen can result in processing difficulties as well as deterioration of the physical properties of the cured rubbers. Optionally, Polysiloxane B may be substituted at one or more of its silicon atoms by non-reactive monovalent radicals such as are described above in the context of substitution of the silicon atoms of Polysiloxane A.

The silicone rubbers of this invention are prepared by the condensation of Polysiloxane A and Polysiloxane B in the presence of a sufficient amount of curing catalyst to cause reaction between the silicon bonded hydrogen atoms of Polysiloxane B and the active hydrogen containing groups of Polysiloxane A. In producing the subject silicone rubbers, Polysiloxane B is utilized in an amount such as to cause essentially complete reaction of the active hydrogen containing groups of Polysiloxane A. Utilization of from 0.1 to 50 parts by weight of Polysiloxane B per 100 parts by weight of Polysiloxane A is typical and depends in part on the amount of silicon-bonded hydrogen present in component B.

Suitable curing catalyst include, tin, titanate or platinum containing catalysts. For example, organic acid metal salts such as dibutyltin dilaurate, dibutyltin diacetate, stannous octoate, dibutyltin dioctoate, stannous laurate, and iron(II) stannoctenate; titanium acid esters such as tetrabutyl titanate, tetrapropylene titanate and dibutoxytitanium bis(ethylacetoacetate); platinum compounds such as chloroplatinic acid; as well as platinum metal and platinum black. Tin containing catalysts are of particular interest.

The catalyst may be utilized in finely divided powder form or as a solution or complex. The form of the catalyst will depend, in large part, on the particular catalyst selected. In the case of platinum metal, the catalyst is commonly added in finely divided form on a suitable carrier, in contrast, chloroplatanic acid may be added in powder form, dissolved in suitable solvent, or as a complex with other materials, for example olefins, alkenylsiloxanes and diketones.

When using organic acid metal salts and titanium acid acids, an amount of catalyst of from about 0.01 to about 5.0, preferably from about 0.05 to about 2.0, parts by weight per 100 parts of Polysiloxane A will be used. Platinum catalysts, however, are generally used in amounts of from about 0.1 to about 1,000, preferably from about 1 to 100, parts by weight of platinum metal per 1,000,000 parts by weight of Polyorganosiloxane A and Polyorganosiloxane B combined.

The silicone rubbers are prepared by creating a homogeneous aqueous dispersion of Polysiloxane A, Polysiloxane B and catalyst which is brought into contact with a gas or liquid of higher temperature (herein referred to as the "curing medium") to effect curing of the polysiloxane components. Silicone rubbers so prepared are herein referred to as being "emulsion cured". The dispersed phase should be in finely divided form, accordingly, the use of a colloid mill or homogenizer may be desirable. The dispersion may also contain relatively small amounts of surfactant. Surfactant assists in maintaining the dispersed phase in the form of regularly shaped discrete spheres. The surfactant should not, however, react with either of the polysiloxane reactants.

The curing medium includes liquids such as liquid paraffin, water, dimethylsilicone oils and phthalate esters as well as non-flammable gases such as nitrogen and air. Water is the preferred liquid curing medium. When contacting the dispersion with the curing medium it is essential that the discrete spherical form of the dispersed phase be maintained. Thus, when the curing medium is a liquid, the dispersion will be brought into contact with the liquid curing medium in metered fashion with vigorous agitation followed by separation of the cured rubber; when the curing medium is a gas, the dispersion will be sprayed into the high temperature gas as finely atomized droplets.

The preparation of emulsion cured silicone rubbers is set forth in greater detail in U.S. Patent No. 4,849,564, which exemplifies the production of both functionalized and non-functionalized rubbers and is referred to with respect to its prepartion of non-functionalized rubbers. Emulsion polymerized rubbers are commercially available from Dow Corning Corporation, with the product sold under the designation Trefil E600 being of particular interest.

The silicone rubbers are present in the compositions of this invention in amounts of from 0.5 to 30 percent by weight, based on the total weight of the poly(arylene sulfide) and silicone rubber components. The presence of in excess of 30 percent by weight of silicone rubber may lead to off-gassing and processing difficulties as well as undesirable reductions in tensile strength. The use of less than 0.5 percent by weight of rubber may fail to provide the desired improvements in ductility.

When improved impact of molded and extruded articles is sought, it is desirable to utilize the silicone rubber in an amount of at least 5 percent by weight, preferably from 7 to 20 percent by weight, most preferably from 7 to 15 percent by weight, based on the total weight of the poly(arylene sulfide) and silicone rubber components. Improved melt ductility, however, may be obtained utilizing silicone rubber in amounts which are as low as 0.5 percent by weight based on the total weight of the poly(arylene sulfide) and silicone rubber components. For the improved production of extruded, drawn or spun articles such as fibers, filaments, films and coatings, the silicone rubber may be used in amounts of from 0.5 to 10 percent by weight, preferably from 0.5 to 5 percent by weight, based on the total weight of the poly(arylene sulfide) and silicone rubber components. In certain fiber and filament applications, it may be of particular interest to use from 0.5 to 3 percent by weight of silicone rubber, based on the total weight of the poly(arylene sulfide) and silicone rubber components.

The aminosilanes suitable for use herein include aminosilanes of the formula:

[RO]₃Si[(CH₂)ₓ(NH(CH₂)_{y})_{z}NH₂]

wherein R represents an alkyl group having 1 to 4, preferably 1 to 2 carbon atoms, x is an integer having a value of 1 to 4, preferably 1 to 3, y is an integer having a value of 1 to 4, preferably 1 to 2, and z is an integer having a value from 0 to 2, preferably 0 to 2.

Included in the aminosilanes described above are gamma-aminopropyltrimethoxysilane; gamma-aminopropyltriethoxysilane; N-beta(aminoethyl)-gamma-aminopropyltrimethoxysilane; and trifunctional silanes of the formula:

H₂NCH₂CH₂NHCH₂CH₂NHCH₂CH₂CH₂Si(OCH₃)₃

Gamma-aminopropyltriethoxysilane is of particular interest in the practice of this invention.

The aminosilane is present in the compositions of this invention in an amount of from 0.1 to 2.0, parts by weight preferably from 0.1 to 0.7 parts by weight, based on 100 parts by weight of the poly(arylene sulfide), silicone rubber and aminosilane components combined. Less than 0.5 parts by weight of aminosilane may not always provide sufficient compatilization, whereas, in excess of 2.0 parts by weight of organosilane can result in excessive viscosity build-up and off-gassing.

The preparation of organosilanes is well known in the art. See for example U.S. Pat. No. 2,723,987; C. Eaborn, *Organosilicon Compounds,* Butterworth, London (1960); W. Noll, *Chemistry and Technology of Silicones,* Academic, NY (1968); and L.M. Shorr, *J. Am. Chem. Soc,* 76, 1390 (1954). Aminosilanes suitable for use herein are widely available from a variety of manufacturers including Dow Corning Corporation and Union Carbide Corporation.

Differences in physical properties may be observed depending upon the particular organosilane utilized. Good impact and elongation properties are obtained by use of an aminosilane. Without wishing to be bound to any particular theory, it is believed that the aminosilane functions as a type of compatibilizer between the silicone rubber and poly(arylene sulfide) components of the compositions of this invention. Moreover, it has been found that poly(arylene sulfide) resins lacking an aminosilane additive and containing a functionalized silicone rubber have different impact and elongation characteristics compared to poly(arylene sulfide) resins containing a non-functionalized silicone rubber and an aminosilane. It is postulated that the aminosilane, non-functionalized silicone rubber, and poly(arylene sulfide) components herein described may undergo a reaction in the melt which is different from the reaction between a poly(arylene sulfide) and a functionalized silicone rubber. Whether the differences in the melt dynamics of this invention result from the method and/or extent of compatibilization, the differences in physical properties can be striking.

Additionally, silane modified poly(arylene sulfide)s containing non-functionalized rubbers may exhibit different physical properties and processability characteristics when the non-functionalized rubbers are produced by different synthetic mechanisms (for example, hydrosilation as opposed to condensation). These differences in physical properties for otherwise chemically identical rubbers also suggest differences in the mechanism of component interaction.

The compositions of this invention can be prepared by conventional melt blending techniques wherein the poly(arylene sulfide), silicone rubber and aminosilane components are combined under conditions of elevated temperature and shear. The order in which the components are combined is not critical, thus various components can be combined in a single or multiple step(s). Desirable melt blends are generally prepared by co-extrusion of the resin components at a temperature of up to about to 340°C. For purposes of this invention, preferred melt temperatures are from about 240°C to about 340°C, with compositions containing higher viscosity poly(arylene sulfide) components being extruded at higher temperatures within this range than compositions containing lower viscosity poly(arylene sulfide) components. Within this described temperature range, the use of a non-functionalized silicone rubber as herein described permits the use of higher extrusion temperatures than might otherwise be employed utilizing a functionalized silicone rubber, which may be prone to off-gassing and other processing difficulties in the melt. Depending upon the particular components utilized and their relative amounts, the use of melt temperatures in excess of 340°C can result in deterioration of the physical properties of the resultant compositions.

The compositions of this invention are useful in the production of a variety of molded and extruded articles. Compositions which exhibit a relatively high degree of ductility in the melt are useful in the production of film, sheet, fiber and monofilament. Additionally, the compositions of this invention may be used as an encapsulant or coating.

Depending on the objects being formed and the processing techniques employed, the compositions of this invention may further comprise one or more optional additives such as, for example, fillers, antioxidants, heat stabilizers, ultraviolet stabilizers, mold release agents, lubricants, plasticizers, flame retardants and pigments. The total amount of all such optional additives, exclusive of filler, typically will not exceed about 5 percent of the total weight of the composition and oftentimes will not exceed about 2 percent of the total weight of the composition. It should be noted that filler, when present, will typically account for up to about 65 percent of the compositions' total weight. The optional additives may be incorporated by a variety of techniques which combine the additives with the melt blend in a substantially uniform manner; extrusion compounding being preferred.

In a preferred embodiment the compositions of this invention consist essentially of:
(A) from 93 to 85 percent by weight, based on the total weight of components (A) and (B) of a poly(phenylene sulfide) having a melt viscosity of from 15 to 500 Pas at 1,200 sec⁻¹ and 310°C;
(B) from 7 to 15 percent by weight, based on the total weight of components (A) and (B) of an emulsion cured silicone rubber which is the reaction product of a dimethylpolysiloxane homopolymer having terminal hydroxyl groups at both ends of its molecular chain and a trimethylsiloxy-terminated methylhydrogenpolysiloxane-organopolysiloxane having at least two terminal active hydrogen functional groups per molecule, wherein the silicone rubber has an average particle size of from 1 µm to 10 µm prior to incorporation into the compositions of this invention; and
(C) from 0.25 to 0.75 parts by weight per 100 parts by weight of components (A), (B), and (C) combined of an aminosilane of the formula:

   [RO]₃Si[(CH₂)₃NH₂]

   wherein R represents an alkyl group having 1 to 2 carbon atoms.

The invention excludes compositions prepared by combining components (B) and (C) with component (A) in a dispersion medium.

### EXAMPLES

The following examples are presented to further illustrate this invention. The examples are not, however, intended to limit the invention in any way. The tests hereinafter described were performed on samples molded from compositions prepared in accordance with the examples. Unless otherwise indicated all parts and percentages are by weight based on total composition weight.

Izod impact (notched and unnotched) was measured pursuant to ASTM method D-648. Tensile strength and elongation were measured pursuant to ASTM method D-638. Instrumental Impact (RDT) was measured pursuant to ASTM method D-3763-85 utilizing a 0.3175 cm (1/8") thick disk 5.08 cm (2") in diameter, and a 14.97 kg (33 lb) dart having a fall rate of 8200 meters/sec.

The examples designated E₁, E₂, E₄₋₉, are in accordance with the present invention; E₃ contains an epoxysilane instead of the aminosilane of the invention; and C₁₋₁₁ are comparative examples.

### EXAMPLE 1

Compositions as described in Tables 1 and 2 were compounded by mixing the components in the described proportions and melt blending the resulting mixtures on a Haake conical twin screw extruder (System 90) to produce an extrudate which was cooled and pelletized. Prior to mixing the poly(phenylene sulfide) and silicone rubber components were dried overnight at temperatures of 120°C and 60°C, respectively. Extrusion conditions were as follows:

| | |
|---|---|
| melt temperature | 290 to 310°C |
| die temperature | 290 to 310°C; |
| screw speed | 60 rpm. |

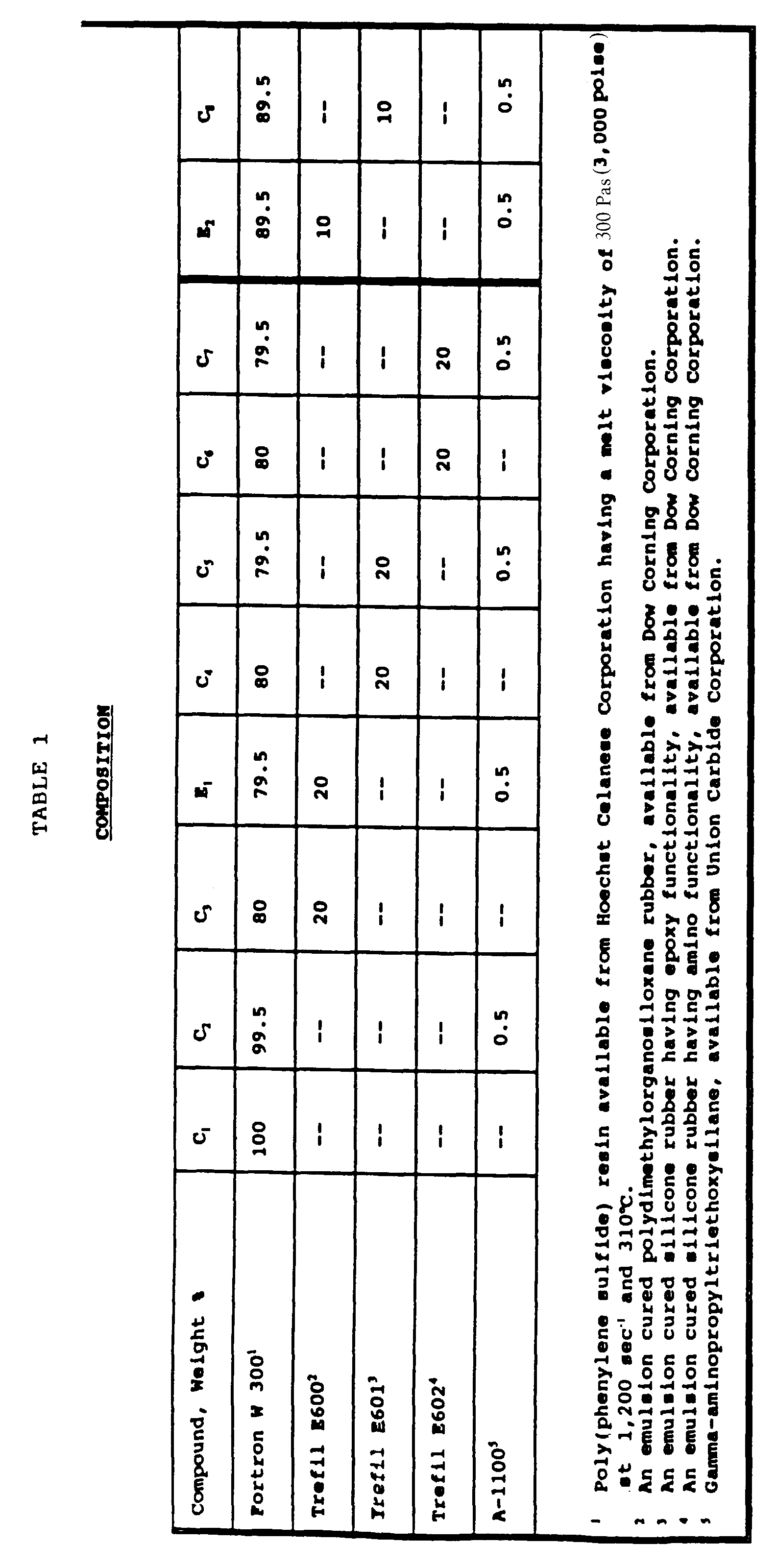

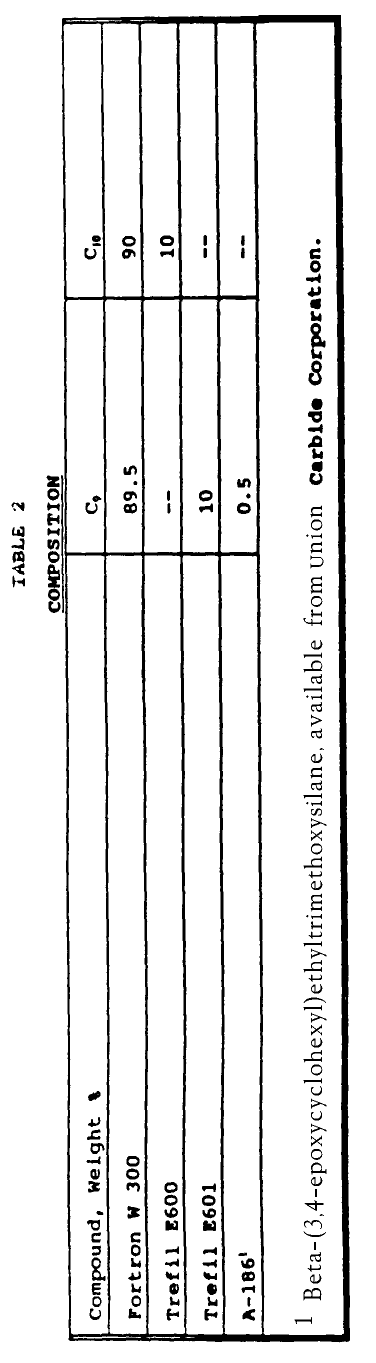

The pelletized melt blends were molded on a Boy 22S molding machine into ASTM test specimens 0.3175 cm (1/8") thick. Prior to molding the melt blends were dried overnight at 110°C.
Conditions during molding were as follows:

| | |
|---|---|
| melt temperature | 310°C |
| mold temperature | 80°C |
| cycle time | 30 sec |
| screw speed | 110 rpm |

The tensile strength, elongation, Izod and instrumental impact properties of the molded test samples are provided in Table 3.

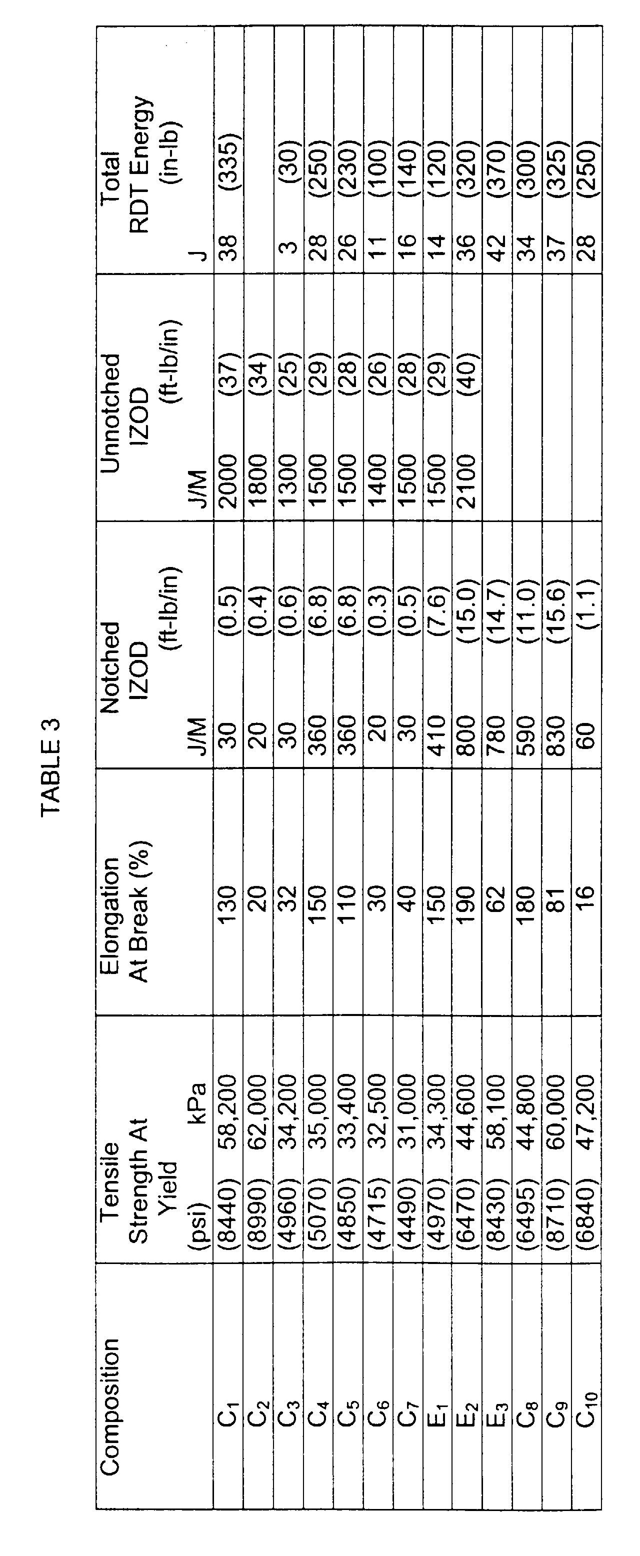

From Tables 1, 2 and 3, it would appear that the silicone rubber designated as E600 provides a desirable combination of impact and elongation properties in the presence of an aminosilane additive (See Examples E₁ and E₂). It was also observed that each of controls C₃, C₆, C₇, and C₁₀ failed to provide significant improvements in one or more impact properties compared to the poly(phenylene sulfide) resin alone (C₁). Under the extrusion and molding conditions employed, compositions containing the 10% functionalized silicone rubber designated as E601 appeared to provide molded samples having a desirable combination of physical properties (see controls C₄, C₅, C₈ and C₉).

### Example 2

The preparation of two of the Example 1 compositions ( E₂ and C₈) was repeated utilizing a larger extruder, i.e., a 30 mm ZSK twin screw extruder, at somewhat higher processing temperatures. Additionally, a new composition C₁₁ containing 89.5% of the described poly(phenylene sulfide) resin (Fortron W300), 10% of Trefil (E602), and 0.5% of A-1100 aminosilane was compounded on this large extruder. Prior to mixing, the poly(phenylene sulfide) and silicone rubber components were dried overnight at temperatures of 120°C and 60°C respectively. Extrusion conditions were as follows:

| | |
|---|---|
| melt temperature | 330 to 340°C |
| die temperature | 330 to 350°C; |
| screw speed | 75 rpm |
| vacuum | 85 kPa (25 in. of Hg). |

The extrudate was cooled and pelletized. The resulting melt blends were molded into test specimens utilizing the procedures described in Example 1. Physical properties for the test specimens are provided in Table 4.

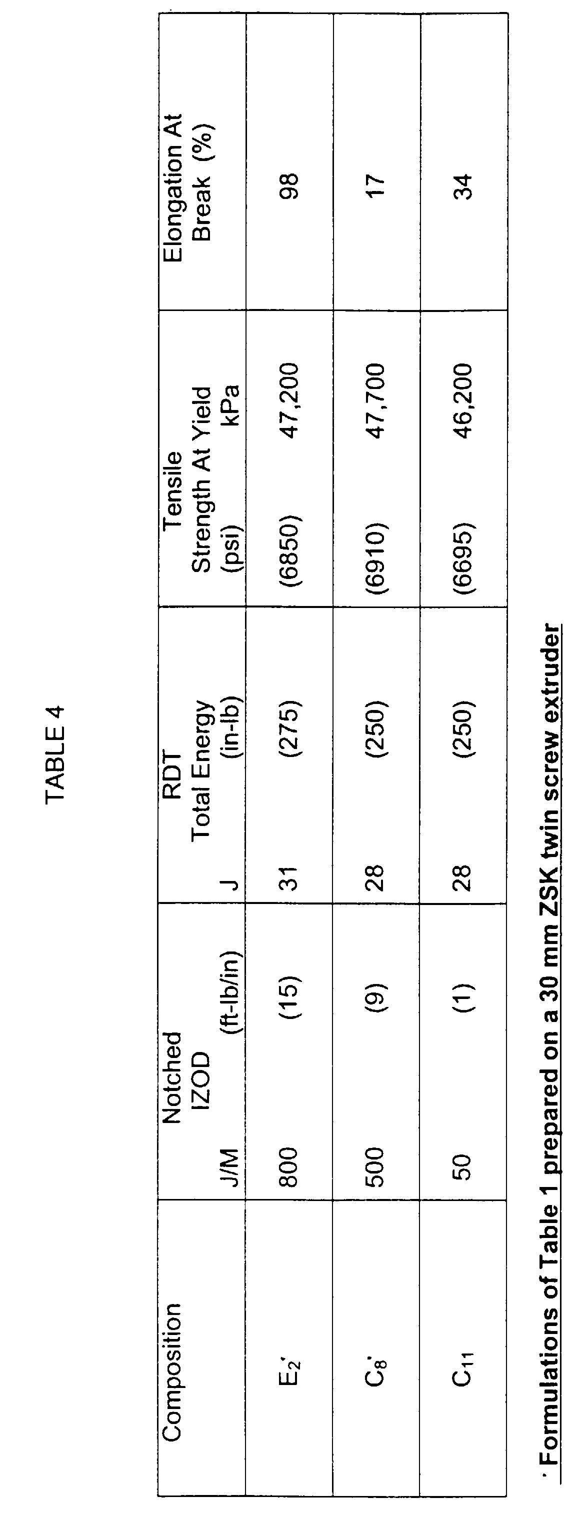

From Table 4 it is apparent that molded test samples prepared from poly(phenylene sulfide) compositions containing an aminosilane and the silicone rubbers designated as E601(C₈) and E602(C₁₁) failed to demonstrated either the enhancement in Notched Izod impact or the elongation properties otherwise obtained by the poly(phenylene sulfide) composition which contained an aminosilane and the silicone rubber designated as E600 (E₂). Thus, the observed property benefits of Example 1 for compositions containing the functionalized rubber E601 (C₈) were not obtained when the compositions were scaled up on a larger extruder utilizing higher processing temperatures. Additionally, off-gassing was observed when the E601 containing compositions were processed.

### Example 3

Poly(phenylene sulfide) compositions containing varying amounts of silicone rubber and aminosilane were prepared by forming a formulation as described in Example E₂ of Table 4 on a 30 MM twin screw extruder and letting this formulation down with the described poly(phenylene sulfide) resin (Fortron W300, containing no additional aminosilane)on a Haake extruder utilizing the conditions specified in Example 1. The compositions were molded and tested as set forth in Example 1. Physical properties for these compositions are provided in Table 5. Additionally, a fiber spinnability test was perfomed utilizing a test apparatus consisting of a melting assembly, a filter pack, a single hole spinneret (equipped with a circular die 0.5 mm (0.020 inch) in diameter and 0.7 mm (0.027 inch) in depth), and a take-up device capable of variable speeds. During the spinning operation the melt temperature was varied by 10°C intervals. The take-up speed was then varied until fiber breakage occurred. Spinnability test results are provided in Table 6.

As seen from Table 5, under these processing conditions, notched Izod impact performance is significantly enhanced at a silicone rubber concentration of 7.5 weight percent and up, whereas, improvements in instrumental impact were noted at all concentrations of silicone rubber tested, i.e., 1 to 10 weight%. From Table 6 it would appear that spinnability at relatively high take-up speed could be obtained at silicone rubber concentrations as low as 1%. Further, at silicone rubber levels of 1%, lower melt temperatures could be effectively utilized.

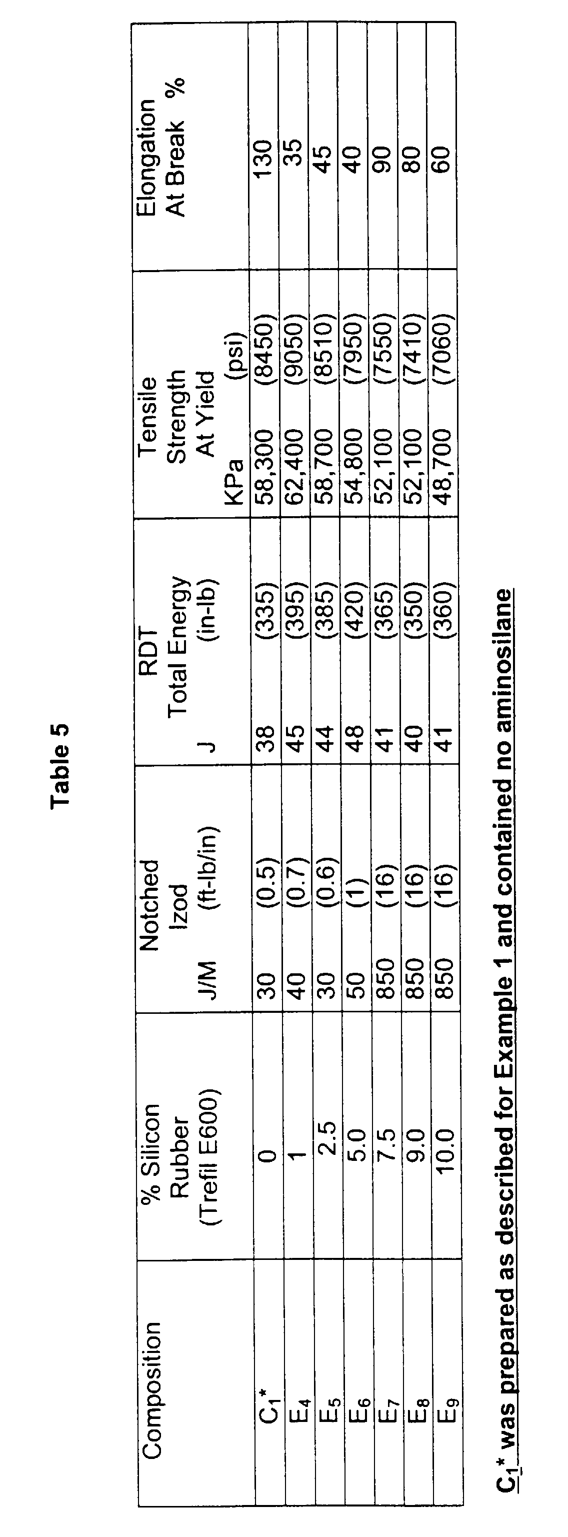

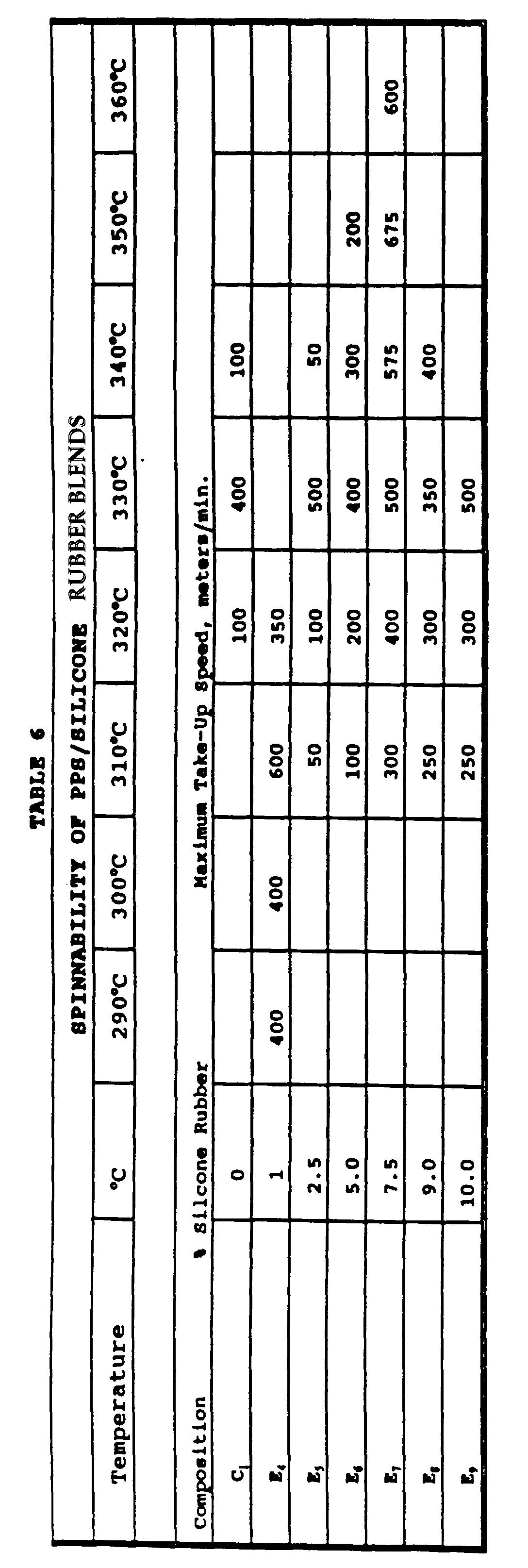

## Claims

1. A resin composition which comprises a melt blend of:
(A) from 99.5 to 70 percent by weight, based on the total weight of components (A) and (B), of a poly(arylene sulfide) having a melt viscosity of from 30 to 800 Pas as measured at 1,200 sec⁻¹ and 310°C.
(B) from 0.5 to 30 percent by weight, based on the total weight of components (A) and (B), of a substantially non-functionalized emulsion cured silicone rubber which is the condensation product of (i) an organopolysiloxane having at least two active hydrogen functional groups per molecule and (ii) an organohydrogenpolysiloxane having at least two silicon-bonded hydrogen atoms per molecule; and
(C) from 0.1 to 2.0 parts by weight, based on 100 parts by weight of components A, B and C combined, of an aminosilane;
wherein said composition has been prepared by combining components B and C with component A in the absence of a dispersion medium.

2. A resin composition as described in claim 1 wherein the poly(arylene sulfide) is a polymer consisting essentially of repeating units of the formula: 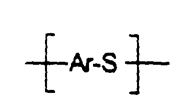 wherein Ar for an individual repeating unit is a divalent radical selected from the group consisting of: 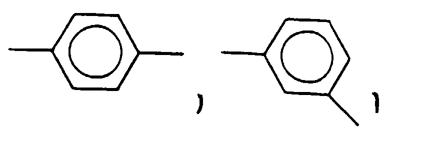 and 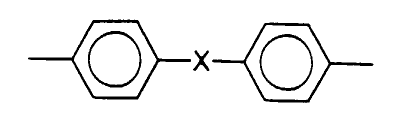 wherein X is a divalent radical selected from the group consisting of: -SO₂-, -C(O)-, -O-, -CₐH₂ₐ-, and -C(CH₃)₂- wherein a is an integer having a value of 0 to 3.

3. A resin composition as described in claim 2 wherein the poly(arylene sulfide) is poly(phenylene sulfide).

4. A resin composition as described in any of claims 1-3 wherein the silicone rubber is the condensation product of an organopolysiloxane having at least two terminal hydroxyl groups per molecule, and an organohydrogenpolysiloxane having at least two silicon-bonded hydrogen atoms per molecule.

5. A resin composition as described in claim 4 wherein the organohydrogenpolysiloxane is selected from the group consisting of trimethylsiloxy-terminated methylhydrogenpolysiloxanes; trimethylsiloxy-terminated dimethylsiloxane-methylhydrogensiloxane copolymers; methylhydrogensiloxy-terminated dimethylsiloxane-methylhydrogensiloxane copolymers; dimethylsiloxane-methylhydrogensiloxane cyclic copolymers; copolymers composed of (CH₃)₂HSiO_{1/2} units and SiO_{4/2} units; and copolymers composed of (CH₃)₃SiO_{1/2} units, (CH₃)₂HSiO_{1/2} units and SiO_{4/2} units.

6. A resin composition as described in any of claims 1-5 wherein the silicone rubber is in the form of spherical particles having an average particle diameter of from 0.5 µm to 100 µm prior to melt blending and is prepared by a process which comprises the steps of:
(a) creating a homogeneous aqueous dispersion of an organopolysiloxane having at least two terminal active hydrogen functional groups per molecule, an organohydrogenpolysiloxane having at least two silicon-bonded hydrogen atoms per molecule, and a curing catalyst;
(b) contacting the aqueous dispersion with a curing medium selected from the group consisting of higher temperature non-reactive liquids and gases to effect curing of the polysiloxane components; and
(c) recovering the cured rubber.

7. A composition as described in any of claims 1-6 wherein the aminosilane is represented by the formula:
[RO]₃Si[(CH₂)_{X}(NH(CH₂)_{Y})₂NH₂] (I)
wherein R represents an alkyl group having 1 to 4 carbon atoms, x is an integer having a value of 1 to 4, y is an integer having a value of 1 to 4, and z is an integer having a value from 0 to 2.

8. A composition as described in claim 7 wherein the aminosilane is selected from the group consisting of gamma-aminopropyltrimethoxysilane ; gamma-aminopropyltriethoxysilane; N-beta(aminoethyl)-gamma-aminopropyltrimethoxysilane; and trifunctional silanes of the fomula:
H₂NCH₂CH₂NHCH₂CH₂NHCH₂CH₂CH₂Si(OCH₃)₃

9. A composition as described in claim 8 wherein the aminosilane is gamma-aminopropyltriethoxysilane.

10. A composition as described in any of claims 1-9 wherein the silicone rubber is present in an amount of from 5 to 20 percent by weight, based on the total weight of components (A) and (B).

11. A composition as described in any of claims 1-10 which further comprises at least one additional component selected from the group consisting of fillers, antioxidants, heat stabilizers, ultraviolet stabilizers, mold release agents, lubricants, plasticizers, flame retardants and pigments.

12. A composition which consists essentially of a melt blend of:
(A) from about 93 to about 85 percent by weight, based on the total weight of components (A) and (B) of a poly(phenylene sulfide) having a melt viscosity of from 15 to 800 Pas at 1,200 sec⁻¹ and 310°C;
(B) from about 7 to about 15 percent by weight, based on the total weight of components (A) and (B) of a substantially non-functionalized emulsion cured silicone rubber which is the reaction product of a dimethylpolysiloxane homopolymer having terminal hydroxyl groups at both ends of its molecular chain and a trimethylsiloxy-terminated methylhydrogenpolysiloxane-organopolysiloxane having at least two terminal active hydrogen functional groups per molecule, wherein the silicone rubber has an average particle size of from 1 µm to 10 µm prior to incorporation into the compositions of this invention; and
(C) from 0.25 to 0.75 parts by weight, per 100 parts by weight of components (A), (B), and (C) combined of an amino-functionalized silane of the formula:
[RO]₃Si[(CH₂)₃NH₂]
wherein R represents an alkyl group having 1 to 2 carbon atoms;
wherein said composition has been prepared by combining components B and C with component A in the absence of a dispersion medium.

13. A resin composition as described in claim 12 wherein the poly(phenylene sulfide) has a melt viscosity of 100 to 500 Pas at 1,200 sec⁻¹ and 310°C.

14. A process for producing a poly(arylene sulfide) resin composition which comprises the steps of:
(1) combining in a substantially anhydrous state:
(A) from 99.5 to 70 percent by weight, based on the total weight of components (A) and (B), of a poly(arylene sulfide) having a melt viscosity of from 30 to 800 Pas as measured at 1,200 sec⁻¹ and 310°C.
(B) from 0.5 to 30 percent by weight, based on the total weight of components (A) and (B), of a substantially non-functionalized emulsion cured silicone rubber which is the condensation product of (i) an organopolysiloxane having at least two active hydrogen functional groups per molecule and (ii) and organohydrogenpolysiloxane having at least two silicon-bonded hydrogen atoms per molecule,
to form a dry or melt blend of poly(arylene sulfide) and silicone rubber;
(2) introducing into the blend of step 1 an aminosilane in an amount of from 0.1 to 2.0 parts by weight, based on 100 parts by weight of component (A), component (B), and the aminosilane combined; and
(3) melt extruding the blend of step 2.

15. A coated article comprising a substrate and a coating wherein the coating is a resin composition as described in any of claims 1-13 or produced by a process as described in claim 14, the silicone rubber being present in an amount of from 0.5 to 10 percent by weight, based on the total weight of components (A) and (B).

16. A molded article formed by subjecting to a molding operation a resin composition as described in any of claims 1-13 or produced by a process as described in claim 14.

17. A fiber formed of a composition as described in any of claims 1-13 or produced by a process as described in claim 14, wherein the silicone rubber is present in an amount of from 0.5 to 3 percent by weight, based on the total weight of components (A) and (B).

18. A film formed of a composition as described in any of claims 1-13 or produced by a process as described in claim 14, wherein the silicone rubber is present in an amount of from 0.5 to 10 percent by weight, based on the total weight of components (A) and (B).

## Patentansprüche

1. Harzzusammensetzung, umfassend ein Schmelzgemisch aus:
(A) 99,5 bis 70 Gew.-%, bezogen auf das Gesamtgewicht der Komponenten (A) und (B), eines Polyarylensulfids mit einer bei 1200 s⁻¹ und 310°C gemessenen Schmelzviskosität von 30 bis 800 Pa·s;
(B) 0,5 bis 30 Gew.-% , bezogen auf das Gesamtgewicht der Komponenten (A) und (B), eines im wesentlichen nichtfunktionalisierten emulsionsgehärteten Silikonkautschuks, bei dem es sich um das Kondensationsprodukt von (i) einem Organopolysiloxan mit wenigstens zwei funktionellen Gruppen mit aktivem Wasserstoff pro Molekül und (ii) einem Organohydrogenpolysiloxan mit wenigstens zwei an Silicium gebundenen Wasserstoffatomen pro Molekül handelt; und
(C) 0,1 bis 2,0 Gewichtsteilen, bezogen auf 100 Gewichtsteile der kombinierten Komponenten A, B und C, eines Aminosilans;
wobei die Zusammensetzung durch Kombinieren der Komponenten B und C mit Komponente A in Abwesenheit eines Dispersionsmediums hergestellt wurde.

2. Harzzusammensetzung gemäß Anspruch 1, wobei das Polyarylensulfid ein Polymer ist, das im wesentlichen aus Repetiereinheiten der Formel 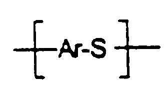 besteht, wobei Ar für eine einzelne Repetiereinheit ein zweiwertiger Rest ist, der aus der Gruppe ausgewählt ist, die aus 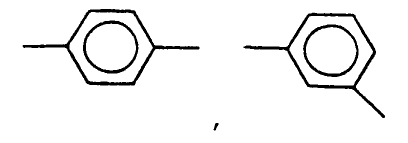 und 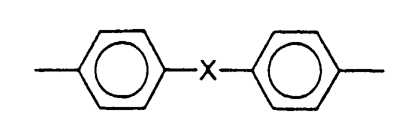 besteht, wobei X ein zweiwertiger Rest ist, der aus der Gruppe ausgewählt ist, die aus -SO₂-, -C(O)-, -O-, -CₐH₂ₐ-und -C(CH₃)₂- besteht, wobei a eine ganze Zahl mit einem Wert von 0 bis 3 ist.

3. Harzzusammensetzung gemäß Anspruch 2, wobei es sich bei dem Polyarylensulfid um Polyphenylensulfid handelt.

4. Harzzusammensetzung gemäß einem der Ansprüche 1 bis 3, wobei es sich bei dem Silikonkautschuk um das Kondensationsprodukt von einem Organopolysiloxan mit wenigstens zwei terminalen Hydroxygruppen pro Molekül und einem Organohydrogenpolysiloxan mit wenigstens zwei an Silicium gebundenen Wasserstoffatomen pro Molekül handelt.

5. Harzzusammensetzung gemäß Anspruch 2, wobei das Organohydrogenpolysiloxan aus der Gruppe ausgewählt ist, die aus trimethylsiloxyterminierten Methylhydrogenpolysiloxanen, trimethylsiloxyterminierten Dimethylsiloxan-Methylhydrogensiloxan-Copolymeren, methylhydrogensiloxyterminierten Dimethylsiloxan-Methylhydrogensiloxan-Copolymeren, cyclischen Dimethylsiloxan-Methylhydrogensiloxan-Copolymeren, Copolymeren, die aus (CH₃)₂HSiO_{1/2}-Einheiten und SiO_{4/2}-Einheiten bestehen, sowie Copolymeren, die aus (CH₃)₃SiO_{1/2}-Einheiten, (CH₃)₂HSiO_{1/2}-Einheiten und SiO_{4/2}-Einheiten bestehen, besteht.

6. Harzzusammensetzung gemäß einem der Ansprüche 1 bis 5, wobei der Silikonkautschuk vor dem Schmelzmischen in Form von sphärischen Teilchen mit einem mittleren Teilchendurchmesser von 0,5 um bis 100 um vorliegt und nach einem Verfahren hergestellt wird, das die folgenden Schritte umfaßt:
(a) Herstellen einer homogenen wäßrigen Dispersion eines Organopolysiloxans mit wenigstens zwei terminalen funktionellen Gruppen mit aktivem Wasserstoff pro Molekül, eines Organohydrogenpolysiloxans mit wenigstens zwei an Silicium gebundenen Wasserstoffatomen pro Molekül und eines Härtungskatalysators;
(b) In-Kontakt-Bringen der wäßrigen Dispersion mit einem Härtungsmedium, das aus der Gruppe ausgewählt ist, die aus bei höherer Temperatur nichtreaktiven Flüssigkeiten und Gasen besteht, so daß eine Härtung der Polysiloxankomponenten bewirkt wird; und
(c) Gewinnen des gehärteten Kautschuks.

7. Zusammensetzung gemäß einem der Ansprüche 1 bis 6, wobei das Aminosilan durch die Formel
[RO]₃Si[(CH₂)ₓ(NH(CH₂)_{y})₂NH₂] (I)
dargestellt wird, wobei R eine Alkylgruppe mit 1 bis 4 Kohlenstoffatomen darstellt, x eine ganze Zahl mit einem Wert von 1 bis 4 ist, y eine ganze Zahl mit einem Wert von 1 bis 4 ist und z eine ganze Zahl mit einem Wert von 0 bis 2 ist.

8. Zusammensetzung gemäß Anspruch 7, wobei das Aminosilan aus der Gruppe ausgewählt ist, die aus γ-Aminopropyltrimethoxysilan, γ-Aminopropyltriethoxysilan, N-β-(Aminoethyl)-γ-aminopropyltrimethoxysilan und trifunktionellen Silanen der Formel
H₂NCH₂CH₂NHCH₂CH₂NHCH₂CH₂CH₂Si(OCH₃)₃
besteht.

9. Zusammensetzung gemäß Anspruch 8, wobei es sich bei dem Aminosilan um γ-Aminopropyltriethoxysilan handelt.

10. Zusammensetzung gemäß einem der Ansprüche 1 bis 9, wobei der Silikonkautschuk in einer Menge von 5 bis 20 Gew.-% vorhanden ist, bezogen auf das Gesamtgewicht der Komponenten (A) und (B).

11. Zusammensetzung gemäß einem der Ansprüche 1 bis 10, die weiterhin wenigstens eine zusätzliche Komponente umfaßt, die aus der Gruppe ausgewählt ist, die aus Füllstoffen, Antioxidantien, Wärmestabilisatoren, UV-Stabilisatoren, Formentrennmitteln, Gleitmitteln, Weichmachern, Flammverzögerungsmitteln und Pigmenten besteht.

12. Zusammensetzung, im wesentlichen bestehend aus einem Schmelzgemisch aus:
(A) etwa 93 bis etwa 85 Gew.-%, bezogen auf das Gesamtgewicht der Komponenten (A) und (B), eines Polyphenylensulfids mit einer bei 1200 s⁻¹ und 310°C gemessenen Schmelzviskosität von 15 bis 800 Pa·s;
(B) etwa 7 bis etwa 15 Gew.-% , bezogen auf das Gesamtgewicht der Komponenten (A) und (B), eines im wesentlichen nichtfunktionalisierten emulsionsgehärteten Silikonkautschuks, bei dem es sich um das Reaktionsprodukt von einem Dimethylpolysiloxan-Homopolymer mit terminalen Hydroxygruppen an beiden Enden seiner Molekülkette und einem trimethylsiloxyterminierten Methylhydrogenpolysiloxan-Organopolysiloxan mit wenigstens zwei terminalen funktionellen Gruppen mit aktivem Wasserstoff pro Molekül handelt, wobei der Silikonkautschuk vor dem Einbau in die Zusammensetzungen dieser Erfindung eine mittlere Teilchengröße von 1 µm bis 10 µm hat; und
(C) 0,25 bis 0,75 Gewichtsteilen, pro 100 Gewichtsteile der kombinierten Komponenten A, B und C, eines aminofunktionalisierten Silans der Formel
[RO]₃Si[(CH₂)₃NH₂]
wobei R eine Alkylgruppe mit 1 bis 2 Kohlenstoffatomen darstellt;
wobei die Zusammensetzung durch Kombinieren der Komponenten B und C mit Komponente A in Abwesenheit eines Dispersionsmediums hergestellt wurde.

13. Harzzusammensetzung gemäß Anspruch 12, wobei das Polyphenylensulfid eine bei 1200 s⁻¹ und 310°C gemessene Schmelzviskosität von 100 bis 500 Pa·s hat.

14. Verfahren zur Herstellung einer Polyarylensulfidharzzusammensetzung, umfassend die Schritte:
(1) Kombinieren von
(A) 99,5 bis 70 Gew.-%, bezogen auf das Gesamtgewicht der Komponenten (A) und (B), eines Polyarylensulfids mit einer bei 1200 s⁻¹ und 310°C gemessenen Schmelzviskosität von 30 bis 800 Pa·s;
(B) 0,5 bis 30 Gew.-% , bezogen auf das Gesamtgewicht der Komponenten (A) und (B), eines im wesentlichen nichtfunktionalisierten emulsionsgehärteten Silikonkautschuks, bei dem es sich um das Kondensationsprodukt von (i) einem Organopolysiloxan mit wenigstens zwei funktionellen Gruppen mit aktivem Wasserstoff pro Molekül und (ii) einem Organohydrogenpolysiloxan mit wenigstens zwei an Silicium gebundenen Wasserstoffatomen pro Molekül handelt
in einem im wesentlichen wasserfreien Zustand unter Bildung eines trockenen oder Schmelzgemischs aus Polyarylensulfid und Silikonkautschuk;
(2) Einführen eines Aminosilans in einer Menge von 0,1 bis 2,0 Gewichtsteilen, bezogen auf 100 Gewichtsteile der Kombination von Komponente (A), Komponente (B) und dem Aminosilan, in das Gemisch von Schritt 1; und
(3) Schmelzextrudieren des Gemischs von Schritt 2.

15. Beschichteter Gegenstand, der ein Substrat und eine Beschichtung umfaßt, wobei die Beschichtung eine Harzzusammensetzung gemäß einem der Ansprüche 1-13 oder eine nach einem Verfahren gemäß Anspruch 14 hergestellte Harzzusammensetzung ist, wobei der Silikonkautschuk in einer Menge von 0,5 bis 10 Gew.-% vorhanden ist, bezogen auf das Gesamtgewicht der Komponenten (A) und (B).

16. Formteil, das gebildet wird, indem man eine Harzzusammensetzung gemäß einem der Ansprüche 1-13 oder eine nach einem Verfahren gemäß Anspruch 14 hergestellte Harzzusammensetzung einer Formpreßoperation unterzieht.

17. Faser, die aus einer Zusammensetzung gemäß einem der Ansprüche 1-13 oder einer nach einem Verfahren gemäß Anspruch 14 hergestellten Zusammensetzung gebildet ist, wobei der Silikonkautschuk in einer Menge von 0,5 bis 3 Gew.-% vorhanden ist, bezogen auf das Gesamtgewicht der Komponenten (A) und (B).

18. Folie, die aus einer Zusammensetzung gemäß einem der Ansprüche 1-13 oder einer nach einem Verfahren gemäß Anspruch 14 hergestellten Zusammensetzung gebildet ist, wobei der Silikonkautschuk in einer Menge von 0,5 bis 10 Gew.-% vorhanden ist, bezogen auf das Gesamtgewicht der Komponenten (A) und (B).

## Revendications

1. Composition de résine qui comprend un mélange en masse fondue :
(A) de 99,5 à 70 % en poids, sur la base du poids total des constituants (A) et (B), d'un poly(sulfure d'arylène) ayant une viscosité en masse fondue de 30 à 800 Pa.s mesurée à 1200 s⁻¹ et 310°C ;
(B) de 0,5 à 30 % en poids, sur la base du poids total des constituants (A) et (B), d'un caoutchouc silicone pratiquement non fonctionnalisé, vulcanisé en émulsion, qui est le produit de condensation (i) d'un organopolysiloxane. ayant au moins deux groupes fonctionnels à hydrogène actif par molécule et (ii) d'un organohydrogénopolysiloxane ayant au moins deux atomes d'hydrogène liés au silicium par molécule ; et
(C) de 0,1 à 2,0 parties en poids, sur la base de 100 parties en poids des constituants A, B et C combinés, d'un aminosilane ;
ladite composition ayant été préparée en associant les constituants B et C au constituant A en l'absence d'un milieu dispersant.

2. Composition de résine répondant à la définition suivant la revendication 1, dans laquelle le poly(sulfure d'arylène) est un polymère consistant essentiellement en motifs répétés de formule : 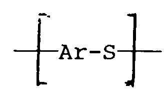 dans laquelle Ar, pour un motif répété individuel, représente un radical divalent choisi dans le groupe consistant en : 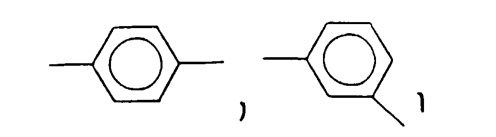 et 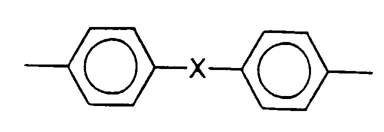 formule dans laquelle X représente un radical divalent choisi dans le groupe consistant en : -SO₂-, -C(O)-, -O-, -CₐH₂ₐ- et -C(CH₃)₂- dans lesquelles a représente un nombre entier ayant une valeur de 0 à 3.

3. Composition de résine répondant à la définition suivant la revendication 2, dans laquelle le poly(sulfure d'arylène) est un poly(sulfure de phénylène).

4. Composition de résine répondant à la définition suivant l'une quelconque des revendications 1 à 3, dans laquelle le caoutchouc silicone est le produit de condensation d'un organopolysiloxane ayant au moins deux groupes hydroxyle terminaux par molécule, et d'un organohydrogénopolysiloxane ayant au moins deux atomes d'hydrogène liés au silicium par molécule.

5. Composition de résine répondant à la définition suivant la revendication 4, dans laquelle l'organohydrogénopolysiloxane est choisi dans le groupe consistant en méthylhydrogénopolysiloxanes à terminaison triméthylsiloxy ; copolymères diméthylsiloxane-méthylhydrogénosiloxane à terminaison triméthylsiloxy ; copolymères diméthylsiloxane-méthylhydrogénosiloxane à terminaison méthylhydrogénosiloxy ; copolymères cycliques diméthylsiloxane-méthylhydrogénosiloxane ; copolymères constitués de motifs (CH₃)₂HSiO_{1/2} et de motifs SiO_{4/2} ; et copolymères constitués de motifs (CH₃)₃SiO_{1/2}, de motifs (CH₃)₂HSiO_{1/2} et de motifs SiO_{4/2}.

6. Composition de résine répondant à la définition suivant l'une quelconque des revendications 1 à 5, dans laquelle le caoutchouc silicone est sous forme de particules sphériques ayant un diamètre moyen de particules de 0,5 µm à 100 µm avant mélange en masse fondue et est préparé par un procédé qui comprend les étapes consistant :
(a) à former une dispersion aqueuse homogène d'un organopolysiloxane ayant au moins deux groupes fonctionnels à hydrogène actif terminaux par molécule, d'un organohydrogénopolysiloxane ayant au moins deux atomes d'hydrogène liés au silicium par molécule, et d'un catalyseur de durcissement ;
(b) à mettre en contact la dispersion aqueuse avec un milieu de durcissement choisi dans le groupe consistant en liquides et gaz non réactifs à des températures élevées pour provoquer le durcissement des constituants polysiloxane ; et
(c) à recueillir le caoutchouc durci.

7. Composition répondant à la définition suivant l'une quelconque des revendications 1 à 6, dans laquelle l'aminosilane est représenté par la formule :
[RO]₃Si[(CH₂)_{X}(NH(CH₂)_{Y})₂NH₂] (I)
dans laquelle R représente un groupe alkyle ayant 1 à 4 atomes de carbone, x représente un nombre entier ayant une valeur de 1 à 4, y représente un nombre entier ayant une valeur de 1 à 4 et z représente un nombre entier ayant une valeur de 0 à 2.

8. Composition répondant à la définition suivant la revendication 7, dans laquelle l'aminosilane est choisi dans le groupe consistant en gamma-aminopropyltriméthoxysilane ; gamma-amino-propyltriéthoxysilane; N-bêta(amino-éthyl)-gamma-aminopropyltriméthoxysilane; et silanes trifonctionnels de formule :
H₂NCH₂CH₂NHCH₂CH₂NHCH₂CH₂CH₂Si(OCH₃)₃

9. Composition répondant à la définition suivant la revendication 8, dans laquelle l'aminosilane est le gamma-aminopropyltriéthoxysilane.

10. Composition répondant à la définition suivant l'une quelconque des revendications 1 à 9, dans laquelle le caoutchouc silicone est présent en une quantité de 5 à 20 % en poids, sur la base du poids total des constituants (A) et (B).

11. Composition répondant à la définition suivant l'une quelconque des revendications 1 à 10, qui comprend en outre au moins un constituant supplémentaire choisi dans le groupe consistant en charges, antioxydants, stabilisants thermiques, stabilisants UV, agents de démoulage, lubrifiants, plastifiants, retardateurs de flamme et pigments.

12. Composition qui consiste essentiellement en un mélange en masse fondue :
(A) d'environ 93 à environ 85 % en poids, sur la base du poids total des constituants (A) et (B), d'un poly(sulfure de phénylène) ayant une viscosité en masse fondue de 15 à 800 Pa.s à 1200 s⁻¹ et 310°C ;
(B) d'environ 7 à environ 15 % en poids, sur la base du poids total des constituants (A) et (B), d'un caoutchouc silicone pratiquement non fonctionnalisé, vulcanisé en émulsion, qui est le produit de réaction d'un homopolymère de diméthylpolysiloxane ayant des groupes hydroxyle terminaux aux deux extrémités de sa chaîne moléculaire et d'un méthylhydrogénopolysiloxane-organopolysiloxane à terminaison triméthylsiloxy ayant au moins deux groupes fonctionnels à hydrogène actif terminaux par molécule, ledit caoutchouc silicone ayant un diamètre moyen de particules de 1 µm à 10 µm avant incorporation aux compositions de la présente invention ; et
(C) de 0,25 à 0,75 partie en poids, pour 100 parties en poids de constituants (A), (B) et (C) associés, d'un silane amino-fonctionnalisé, de formule :
[RO]₃Si[(CH₂)₃NH₂]
dans laquelle R représente un groupe alkyle ayant 1 ou 2 atomes de carbone ;
ladite composition ayant été préparée en associant les constituants B et C au constituant A en l'absence d'un milieu de dispersion.

13. Composition de résine répondant à la définition suivant la revendication 12, dans laquelle le poly(sulfure de phénylène) a une viscosité en masse fondue de 100 à 500 Pa.s à 1200 s⁻¹ et 310°C.

14. Procédé pour la production d'une composition de résine de poly(sulfure d'arylène), qui comprend les étapes consistant :
(1) à associer à l'état pratiquement anhydre :
(A) 99,5 à 70 % en poids, sur la base du poids total des constituants (A) et (B), d'un poly(sulfure d'arylène) ayant une viscosité en masse fondue de 30 à 800 Pa.s mesurée à 1200 s⁻¹ et 310°C.
(B) 0,5 à 30 % en poids, sur la base du poids total des constituants (A) et (B), d'un caoutchouc silicone pratiquement non fonctionnalisé, vulcanisé en émulsion, qui est le produit de condensation (i) d'un organopolysiloxane ayant au moins deux groupes fonctionnels à hydrogène actif par molécule et (ii) d'un organohydrogénopolysiloxane ayant au moins deux atomes d'hydrogène liés au silicium par molécule,
pour former un mélange sec ou en masse fondue de poly(sulfure d'arylène) et de caoutchouc silicone ;
(2) à introduire dans le mélange de l'étape 1 un aminosilane en une quantité de 0,1 à 2,0 parties en poids, sur la base de 100 parties en poids du constituant (A), du constituant (B) et de l'aminosilane associés ; et
(3) à extruder en masse fondue le mélange de l'étape 2.

15. Article revêtu, comprenant un substrat et un revêtement, dans lequel le revêtement consiste en une composition de résine répondant à la définition suivant l'une quelconque des revendications 1 à 13 ou produite par un procédé répondant à la définition suivant la revendication 14, le caoutchouc silicone étant présent en une quantité de 0,5 à 10 % en poids, sur la base du poids total des constituants (A) et (B).

16. Article moulé formé en soumettant à une opération de moulage, une composition de résine répondant à la définition suivant l'une quelconque des revendications 1 à 13 ou produite par un procédé répondant à la définition suivant la revendication 14.

17. Fibre formée d'une composition répondant à la définition suivant l'une quelconque des revendications 1 à 13 ou produite par un procédé répondant à la définition suivant la revendication 14, dans laquelle le caoutchouc silicone est présent en une quantité de 0,5 à 3 % en poids, sur la base du poids total des constituants (A) et (B).

18. Film formé d'une composition répondant à la définition suivant l'une quelconque des revendications 1 à 13 ou produite par le procédé répondant à la définition suivant la revendication 14, dans lequel le caoutchouc silicone est présent en une quantité de 0,5 à 10 % en poids, sur la base du poids total des constituants (A) et (B).
